# EUROPEAN PATENT APPLICATION

(11) **EP 2 353 764 A1**
(43) Date of publication of application: **10.08.2011**
(21) Application number: 10151749.8
(22) Date of filing: 27.01.2010
(51) Int. Cl.: B23K 9/133, B23K 9/167, B23K 9/173, B65D 85/04, B65H 49/02, B65H 57/18, B65H 59/06

(54) **Container for welding wire with an internal dead volume of at least 15 cm high**

(71) Applicant: Oerlikon Schweisstechnik GmbH, 67304 Eisenberg/Pfalz (DE)
(72) Inventor: Edelmann, Rolf, 67304 Eisenberg/Pfalz (DE); Zoller, Steffen, 67304 Eisenberg/Pfalz (DE)
(74) Representative: Pittis, Olivier

(57) **Abstract**

The invention concerns a container for a welding wire spool (3) comprising a peripheral wall defining a hollow body (1) with an internal volume (6) for receiving a spool (3) of welding wire (4), said hollow body (1) comprising a bottom (8) at its lower end and a removable cover (7) at its upper end, said removable cover (7) comprising a central orifice (9) for extracting the wire (4) and further having a lower surface (7a) directed toward the spool (3); a welding wire spool (3) being positioned in the internal volume (6) of the body (1); and an internal retainer (2) being positioned on the top of the spool (3) so that its lower surface (2a) comes into contact with the spool (3) and its upper surface (2b) is facing the lower surface (7a) of the cover (7), said retainer (3) being axially mobile in said container (1) and comprising a central aperture (5) for passing the welding wire (4). The distance (D) between the upper surface (2b) of the retainer (2) and the lower surface (7a) of the removable cover (7) is of at least 15 cm, before the start of any wire withdrawal from the container.

## Description

The present invention concerns a container or a drum for packaging, storing, transporting and unwinding a coil or spool of welding wire, and the use of such a container in a welding operation, preferably an electric arc welding process, such as a MIG, MAG or submerged arc welding process.

One major problem encountered in automatic or robotic welding is the control of the welding wire, during its withdrawal from the drum or container where it is stored, as twists, entanglements and nodes are often created in the wire by the unwinding process.

These twists, entanglements and nodes are a serious problem as they can lead to subsequent welding defects in the welding joints thus obtained.

Several solutions have already been proposed for trying to solve these twisting problems, which are mainly based on the use of a mobile retainer that is positioned in the wire container, particularly on the welding wire spool, and that keeps the wire spirals "flat" in the drum thereby avoiding or limiting the creation of nodes, twists or similar incidents in the wire, due to a too fast unwinding for example.

For example, EP-A-519424 discloses a container with a retainer device placed on the coil and having an outer periphery matching the diameter of the inner wall of the container and an inner bell-mouthed portion defining a wire extraction opening. The retainer has a size smaller than the internal diameter of the container so that it can freely descend in the container in contact with the coil as the height of the coil decreases as the wire is being unwound from the coil.

EP-A-636098 teaches to use of a square box with an internal flat cover arranged on the wire coil. The cover has a peripheral square border that matches the internal shape of the box so as to retain the welding wire and avoid or limit the twists.

EP-A-1053189 discloses a polygonal box-like body for accommodating a circular coil of wire during the transportation and the unwinding of the coil and a retainer device arranged inside the body on the coil for preventing accidental entanglement of the wire turn during the unwinding of the wire from an upper end of the coil and a wire conduit device for the guiding the wire out from the body during the unwinding.

EP-A-1693139 discloses a drum for a welding wire coil comprising a wire holding device positioned on the coil for holding the loops in position during an unwinding of the wire. The holding device has a rigid central disc and a flexible cover with a dimension greater than an inner diameter of the drum so that corner portions of the cover slightly rise along an inner wall of the drum.

Further, EP-A-1693140 teaches a drum with a conical, tapered or pyramidal inner wall formed of oblique pieces and comprising a rigid retainer or ring with a central orifice positioned on the coil and across which the wire passes, and further with flexible and deformable peripheral expansions projecting beyond the edge of the disc to maintain the wire loops.

However, despite the use of such retainers, it has been noticed that, especially at the start of the unwinding of a spool, these retainers are not sufficient for avoiding the creation of some nodes, twists or similar incidents in the wire.

For trying to solve this problem, it has already been proposed to replace the cover that normally closes the upper part of the wire container or drum, by a removable hood having a conical, a pyramidal or similar shape. Such hoods are generally made of transparent plastic material that can be combined with metal parts, from time to time.

If using such a hood can be efficient for avoiding twists, nodes and similar, it unfortunately leads to other problems including an increase of the overall cost of the product, an increase of the weight of the container, the necessity of providing the hood with the container which increase the number of parts which should be trashed and recycled afterwards, and an increase of handling operations.

As a consequence, using hoods is not totally satisfying and hence there is still a need of an improved container that solves the unwinding problems while overcoming the above drawbacks.

In other words, the problem is to provide a container for welding wire that particularly permits to avoid or to limit the twists, nodes and similar troubles arising during an unwinding operation, especially at the start of the unwinding process, and that is further easy to use, does not require the use of an extra hood and has a cost that is not significantly increased compared to a container of the prior art.

The solution of the present invention is a container for a welding wire spool comprising :
- a peripheral wall defining a hollow body with an internal volume for receiving a spool of welding wire, said hollow body comprising a bottom at its lower end and a removable cover at its upper end, said removable cover comprising a central orifice for extracting the wire and further having a lower surface directed toward the spool,
- a welding wire spool being positioned in the internal volume of the body,
- and an internal retainer being positioned on the top of the spool so that its lower surface comes into contact with the spool and its upper surface is facing the lower surface of the cover, said retainer being axially mobile in said container and comprising a central aperture for passing the welding wire,
characterized in that the distance (D) between the upper surface of the retainer and the lower surface of the removable cover is of at least 15 cm, before the start of any wire withdrawal from the container.

Depending on the embodiment, the container of the present invention can comprise one or several of the following features :
- the distance (D) is of between 15 and 30 cm, before the start of any wire withdrawal from the container.
- the distance (D) is of between 15 and 25 cm, before the start of any wire withdrawal from the container.
- the distance (D) is of between 15 and 20 cm, before the start of any wire withdrawal from the container.
- the retainer is a flat ring.
- the retainer comprises a central aperture having a size of between 20 and 50 cm, preferably of between 30 and 40 cm.
- the cover comprises a central orifice having a size of between 1 and 5 cm, preferably of between 1,5 and 2,5 cm.
- the body has an external height (h) of between 50 and 150 cm and an internal diameter (d) of between 50 and 150 cm.
- the body has a polygonal or a cylindrical shape, such as a square, hexagonal and octagonal shape.
- the retainer or the body are made of wood, plastic, cardboard, metal or any combination thereof, preferably of cardboard.

The invention further concerns an arc welding process for arc welding one or several metal pieces, wherein an electric arc torch is fed with a welding wire, characterized in that said welding wire is withdrawn from a welding wire container according to any one of the present invention.

Depending on the embodiment, the container of the present invention can comprise one or several of the following features :
- the welding torch is a MIG, MAG,submerged arc or TIG-type torch.
- the torch is arranged on a robotic arm.
- the piece or pieces to be welded are automotive pieces, such car elements or parts.

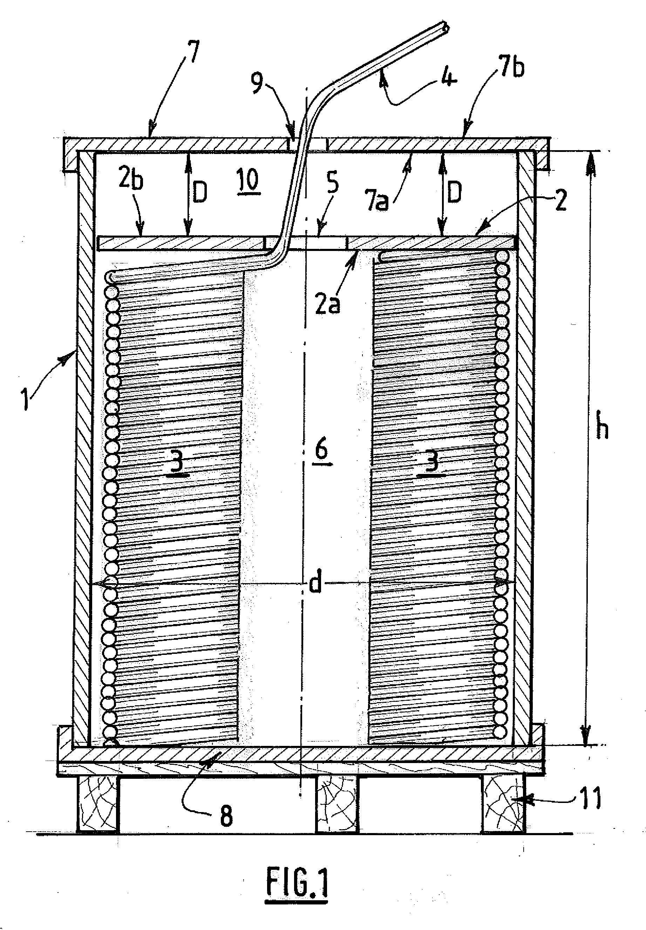

The present invention will be better understood from the following description of an embodiment of the container of the present invention, made with references to the accompanying figure which is a side view (in cross section) of a container according to the invention.

The container 1 of the present invention is designed for packaging a coil or a spool 3 of welding wire 4.

The container comprises a hollow body 1 having one or several side walls or panels forming a circular or polygonal structure such that the body 1 has a square, hexagonal or octagonal shape.

The hollow body 1 comprises a bottom 8 at its lower end that constitutes the container's floor, and a removable cover 7 at its upper end which comprises a central orifice or passage 9 for the wire 4 and that constitutes the container's ceiling.

The removable cover 7 is generally flat and has a lower surface 7a directed toward the internal volume 6 of the body 1, i.e. facing the spool 3, and has further an upper surface 7b situated outside of the body 1.

A circular coil or spool 3 of welding wire 4 is inserted in the internal space or compartment 6 of the hollow body 1 and is lying on the bottom 8. The welding wire can be a flux cored wire or a metal cored wire.

The circular coil 3 of welding wire that is inserted into the hollow body 1, is maintained by a retainer 2 that is arranged on the top of the welding wire coil 3 in order to maintain the wire spirals during the transportation of the container and the unwinding of the coil 3 thereby preventing accidental entanglement of the wire 4 turn during the unwinding of the wire 4 of the coil 3.

The container body 1 can be arranged on a pallet 11. Preferably, the body 1, the bottom 8 and the cover 7 are made of cardboard material, of plastic material or a combination thereof, preferably of cardboard material.

It further comprises an internal retainer 2 for maintaining the spirals of the welding wire during its unwinding. The retainer 2 is formed by a flat ring or disk, preferably made of cardboard, having a central orifice 5 for passing the wire 4 and further comprising an upper surface 2b facing the lower surface 7a of the cover 7, and a lower surface 2a in mechanical contact with the spool 3.

The hollow body 1 of the container has a diameter that is slightly greater than the outer diameter of the retainer 2. Preferably, the retainer 2 covers the whole surface of the welding wire spool 3.

Further, the contour of the retainer 2 is preferably adapted to the inner contour of the retainer's body 1, for example it can match the inner wall of the hollow body 1.

The retainer 2 also comprises a central orifice 5 arranged at the centre of said retainer 2 for extracting the wire 4 from the spool 3.

The dimensions and weight of the retainer 2 should be carefully chosen so as to provide a constant and continuous feeding of the wire 4 at nearly constant drawing force to a welding torch (not shown).

According to the present invention, it has been shown that the twists, entanglements and nodes that are often created at the start of the unwinding of a welding wire container, despite the use of the internal retainer 2, are due to an insufficient distance between the lower surface of the cover 7 that is used for closing the body 1 of the container and the upper surface 2b of the retainer 2 that applies a mechanical pressure on the wire spool 3.

Indeed, if a minimum distance of at least 15 cm between these parts is not kept, then the wire 4 passes through the central orifice 5 of the retainer 2 with an excessively sharp curvature that involves unwinding troubles. Very good results have been obtained with a container comprising an internal distance D of about 17 cm.

The solution for avoiding this undesirable phenomenon is hence to keep a minimum distance of about 15 cm between the welding wire spool 3, i.e. actually the upper surface 2b of the retainer 2, and the lower surface 7a of the cover 7 of the container.

Indeed, with such a minimum distance D of at least 15 cm, the wire 4 can be satisfyingly unwounded without need of any additional hood, even when a new container is used, i.e. a container containing a new spool 3 of wire 4 that has not yet been unwounded.

The solution of the invention is hence particularly efficient at the beginning of the unwinding process when the container is full, i.e. when it contains a new spool 3 having its upper spirals very close to the cover 7 of the container.

The cover 7 of the container can be produced out of reinforced cardboard to make the cover 7 usable as an unwinding "hood".

## Claims

1. Container for a welding wire spool (3) comprising :
- a peripheral wall defining a hollow body (1) with an internal volume (6) for receiving a spool (3) of welding wire (4), said hollow body (1) comprising a bottom (8) at its lower end and a removable cover (7) at its upper end, said removable cover (7) comprising a central orifice (9) for extracting the wire (4) and further having a lower surface (7a) directed toward the spool (3),
- a welding wire spool (3) being positioned in the internal volume (6) of the body (1),
- and an internal retainer (2) being positioned on the top of the spool (3) so that its lower surface (2a) comes into contact with the spool (3) and its upper surface (2b) is facing the lower surface (7a) of the cover (7), said retainer (3) being axially mobile in said container (1) and comprising a central aperture (5) for passing the welding wire (4),
**characterized in that** the distance (D) between the upper surface (2b) of the retainer (2) and the lower surface (7a) of the removable cover (7) is of at least 15 cm, before the start of any wire withdrawal from the container.

2. Container according to the preceding claim, **characterized in that** the distance (D) is of between 15 and 30 cm, before the start of any wire withdrawal from the container.

3. Container according to any one of the preceding claims, **characterized in that** the distance (D) is of between 15 and 25 cm, before the start of any wire withdrawal from the container.

4. Container according to any one of the preceding claims, **characterized in that** the distance (D) is of between 15 and 20 cm, before the start of any wire withdrawal from the container.

5. Container according to any one of the preceding claims, **characterized in that** the retainer (2) is a flat ring.

6. Container according to any one of the preceding claims, **characterized in that** the retainer (2) comprises a central aperture (5) having a size of between 20 and 50 cm.

7. Container according to any one of the preceding claims, **characterized in that** the cover (7) comprises a central orifice (9) having a size of between 1 and 5 cm, preferably of between 1,5 and 2,5 cm.

8. Container according to any one of the preceding claims, **characterized in that** the body (1) has an external height (h) of between 50 and 150 cm and an internal diameter (d) of between 50 and 150 cm.

9. Container according to any one of the preceding claims, **characterized in that** the body (1) has a polygonal or a cylindrical shape, such as a square, hexagonal and octagonal shape.

10. Container according to any one of the preceding claims, **characterized in that** the retainer (2) or the body (1) are made of wood, plastic, cardboard, metal or any combination thereof, preferably of cardboard.

11. Container according to any one of the preceding claims, **characterized in that** the retainer (2) or the body (1) are made of cardboard.

12. Arc welding process for arc welding one or several metal pieces, wherein an electric arc torch is fed with a welding wire (4), **characterized in that** said welding wire (4) is withdrawn from a welding wire container (1) according to any one of the preceding claims.

13. Arc welding process according to claim 12, **characterized in that** the welding torch is a MIG, MAG, submerged arc or TIG-type torch.

14. Arc welding process according to claims 12 or 13, **characterized in that** the torch is arranged on a robotic arm.

15. Arc welding process according to claims 12 or 13, **characterized in that** the piece or pieces to be welded are automotive pieces.

## Amended claims

### Amended claims in accordance with Rule 137(2) EPC.

**1.** Container for a welding wire spool (3) comprising :
- a peripheral wall defining a hollow body (1) with an internal volume (6) for receiving a spool (3) of welding wire (4), said hollow body (1) comprising a bottom (8) at its lower end and a removable cover (7) at its upper end, said removable cover (7) comprising a central orifice (9) for extracting the wire (4) and further having a lower surface (7a) directed toward the spool (3),
- a welding wire spool (3) being positioned in the internal volume (6) of the body (1),
- and an internal retainer (2) being positioned on the top of the spool (3) so that its lower surface (2a) comes into contact with the spool (3) and its upper surface (2b) is facing the lower surface (7a) of the cover (7), said retainer (3) being axially mobile in said container (1) and comprising a central aperture (5) for passing the welding wire (4), **characterized in that** :
- the distance (D) between the upper surface (2b) of the retainer (2) and the lower surface (7a) of the removable cover (7) is of between 15 and 30 cm, before the start of any wire withdrawal from the container,
- the retainer (2) comprises a central aperture (5) having a size of between 20 and 50 cm,
- the cover (7) comprises a central orifice (9) having a size of between 1 and 5 cm,
- and the body (1) has an external height (h) of between 50 and 150 cm and an internal diameter (d) of between 50 and 150 cm.

**2.** Container according to the preceding claim, **characterized in that** the distance (D) is of between 15 and 25 cm, before the start of any wire withdrawal from the container.

**3.** Container according to any one of the preceding claims, **characterized in that** the distance (D) is of between 15 and 20 cm, before the start of any wire withdrawal from the container.

**4.** Container according to any one of the preceding claims, **characterized in that** the retainer (2) is a flat ring.

**5.** Container according to any one of the preceding claims, **characterized in that** the cover (7) comprises a central orifice (9) having a size of between 1,5 and 2,5 cm.

**6.** Container according to any one of the preceding claims, **characterized in that** the body (1) has a polygonal or a cylindrical shape, such as a square, hexagonal and octagonal shape.

**7.** Container according to any one of the preceding claims, **characterized in that** the retainer (2) or the body (1) are made of wood, plastic, cardboard, metal or any combination thereof, preferably of cardboard.

**8.** Container according to any one of the preceding claims, **characterized in that** the retainer (2) or the body (1) are made of cardboard.

**9.** Arc welding process for arc welding one or several metal pieces, wherein an electric arc torch is fed with a welding wire (4), **characterized in that** said welding wire (4) is withdrawn from a welding wire container (1) according to any one of the preceding claims.

**10.** Arc welding process according to claim 9, **characterized in that** the welding torch is a MIG, MAG, submerged arc or TIG-type torch.

**11.** Arc welding process according to claims 9 or 10, **characterized in that** the torch is arranged on a robotic arm.

**12.** Arc welding process according to claims 9 or 10, **characterized in that** the piece or pieces to be welded are automotive pieces.
